# EUROPEAN PATENT APPLICATION

(11) **EP 0 841 117 A1**
(43) Date of publication of application: **13.05.1998**
(21) Application number: 98200053.1
(22) Date of filing: 20.02.1995
(51) Int. Cl.: B23K 3/06

(54) **Process and apparatus for the wave soldering of circuit boards**

(30) Priority: 28.02.1994 US 202489; 02.06.1994 US 253248
(62) Divisional of application: 95909759.3
(71) Applicant: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventor: Connors, Robert W., Western Springs IL 60558 (US); Giacobbe, Frederick W., Naperville IL 60540 (US); Jurcik, Benjamin J., Lisle IL 60532 (US); Rotman, Frédéric, 75004 Paris (FR); McKean, Kevin P., Flower Mound TX 75028 (US)
(74) Representative: Mellul, Sylvie Lisette

(57) **Abstract**

The invention deals with a gas plenum to direct shield gas toward at least one of the solder waves of a wave soldering process and/or toward the underside of a member to be wave soldered in the process, including a side wall (46, 54, 56, 64, 246, 254, 256 or 265) able to be disposed opposite the solder wave, and optionally a top wall, with first orifice means (45, 45''', 55, 55' 245, 245'', 255, 255') formed in the side wall, and/or second orifice means formed in the top wall, and means for pressurizing shield gas within the plenum so that the shield gas can exit the orifice means for travel toward the solder wave and/or toward the underside of the member to be wave soldered.

## Description

The present invention relates to methods and apparatus for providing a non-oxidizing atmosphere at the surface of a wave soldering bath to discourage the formation of oxides on the liquid solder surfaces.

Wave soldering machines have been introduced for a long time in the industry to automatically solder components on a printed circuit board which operation was previously done by hand. A usual wave soldering machine comprises at least one preheating zone to preheat the printed circuit board, at least one soldering zone to solder the components to the board by coating the bottom side of the printed circuit board with molten solder contained in a solder pot, and at least one cooling zone where the solder is solidified. This soldering process, or coating process, is usually conducted in the presence of a fluxing agent which agent is used to improve the wetting of the copper surface on the bottom of the printed circuit board which surface needs to be joined or coated. The fluxing agents are usually corrosive and the excess or residue of these agents must be cleaned after the wave soldering operation.

Low residue no-clean fluxes or flux-less processes have been developed wherein it is possible to carry out the wave soldering process without the inconvenience of standard fluxing agents, under a substantially oxygen-free atmosphere, such as nitrogen.

U.S. Patent 3,705,457 discloses one of the earliest wave soldering processes, including injection of an inert gas to avoid oxidation of the metallic surfaces of the printed circuit board.

U.S. Patent 4,538,757 discloses a wave soldering process under a reducing atmosphere comprising nitrogen and hydrogen, and nitrogen curtains at entrance and exit of the machine to inhibit atmosphere exchange with the ambient air.

U.S. Patent 4,606,493 discloses a method and apparatus for soldering printed circuit boards under an inert gas atmosphere to prevent oxidation of the electrical (usually copper) connections due to the heat produced during soldering and reduce the occurrence of thermal stress defects in the circuit carrier. To this end, an inert gas is injected through slits to provide a plurality of jets of high velocity which impinge the bottom side of the printed circuit board. As a condition of operation, the temperature of the inert gas jets is about twice as high as the temperature of the molten solder in the solder pot (600°C).

U.S. Patent 4,646,958 discloses a solder reflow, or solder chip process which is carried out in a flux-less or flux free system, under an atmosphere comprising nitrogen and saline, or hydrogen and saline.

U.S. Patent 4,821,947 discloses a process to coat a molten metal to a metal-comprising surface without using a flux. This process is carried out in an inert atmosphere in which the temperature is sufficiently low that no damage is done to the metal-comprising surface, and no damage is done to materials such as components adjacent to the metal-comprising surface.

U.S. Patent 5,071,058 discloses a process for conducting a joining/coating operation which is carried out in a controlled oxidizing atmosphere, having an oxidation capability greater than that required to oxidize a metal-comprising filler material used for joining or coating, but having less oxidation capability than that of air. In case of a wave soldering process the oxygen content in the inert gas atmosphere is at least 10 ppm and preferably at least 500 ppm.

U.S. Patent 5,121,875 discloses a short hood for wave soldering machines, wherein preheating of the printed circuit boards is carried out under air. In this process a no-clean flux is used and an oxygen concentration which is less than 5% is recommended at the solder pot.

U.S. Patent 4,921,156 discloses an apparatus having a soldering chamber and comprising means to inject a protective gaseous atmosphere in the soldering chamber and sealing skirt means protruding downwardly into the pool of molten metal solder. Preferably the protective gaseous atmosphere is comprised of nitrogen and possibly of some reducing agent.

U.S. Patent 4,746,289 discloses a process for treating parts under a non-reactive atmosphere with laminar flow conditions. The laminar flow conditions disclosed in this patent usually apply for inert gas injection in wave soldering machines.

In summary, a substantially oxygen-free atmosphere has been achieved by a so-called fully inerted wave soldering system, and a dross reduction boundary system.

The fully inerted wave soldering systems currently uses a tunnel type of system. That type of system is very expensive and time-consuming to install. Because this type of machine uses a tunnel, the access to the assemblies being soldered is greatly reduced. To achieve the desired results that type of system must operate at very high gas flow rates (over 1500 scfh). By doing this, the oxygen ppm level in the inerting system is kept low, thus yielding the desired results. If the flow rate is reduced, the atmosphere becomes unstable and benefits are lost. The primary goal of the fully inerted system is keep the oxygen ppm level below approximately 100 ppm. This then would yield the maximum dross reduction with the greater wettability for soldering.

The dross reduction boundary inerting system was developed to address the problems of the fully inerted system. The design was such that it can be easily installed and is much lower in cost. The other goal of this system was to have a reduced inerting gas flow rate. While those goals appear to have been met, the performance of that system is greatly reduced as compared to that of the fully inerted system. Because the boundary inerting system depends on a circuit board being present for the inerting to take place, the actual inerting effect is never fully achieved. The dross reduction of such a system is typically at best 70% (with reference to a solder pot operating without an inerting gas) with only marginal if any improvements in wettability.

Examples of a dross reduction boundary inerting system can be found in U.S. Patents 5,203,489 and 5,240,169. There is disclosed therein a system in which solder waves are established by wave pumps in a solder reservoir. A conveyor transports circuit boards so that their undersides pass through the solder waves. As depicted in FIG. 10, a cover plate (**C**) extends across the top of the reservoir (**R**) and includes recesses to accommodate the solder waves. On the sides of each solder wave there is thus formed a chamber (**CH**) bordered on its top by the cover, on its bottom by the solder reservoir, one side by the solder wave, and on an opposite side by either (i) a stationary wall (of the solder pot or solder pot housing), or (ii) another solder wave (in the case where the chamber is situated between two solder waves). Each chamber includes a gas outlet defined by a gap (**G**) formed between the solder wave (**SW**) and an edge of the cover slot.

Disposed within each chamber is a gas discharge pipe (**P**) extending parallel to the length of the solder wave. A shield gas is discharged from orifices in the gas discharge pipe to create an inert atmosphere within the chamber (**CH**). A flow (**F**) of shield gas exits the chamber through the outlet. That gas flow is intended to provide an inert blanket across the portion of the wave side which projects above the gap (**G**) when a circuit board is present. However, when no circuit board is present, the portion (**TS**) of the top surface of the wave which curves away from the gap (**G**) is exposed to any ambient oxygen which may be present in the ambient atmosphere, whereupon dross can be formed. In the case of soldering operations in which there occurs a wide spacial gap between successive circuit boards being conveyed to the solder pot, it is not unusual for the solder wave pumps to be deactivated between the soldering of successive boards in order to minimize dross formation.

Furthermore, the behavior of the gas flow (**F**) emerging from the chamber can actually promote the formation of dross on the solder wave. In that regard, the pressure difference between the gas in the discharge pipe on the one hand and the atmosphere disposed above the chamber outlet, on the other hand, is relatively low. As a result, the velocity of the gas traveling within the chamber toward the outlet is relatively slow. Due to its slow travel, the gas will be significantly heated by the hot solder wave. Consequently, the hot gas flow (**F**) emerging from the gap (**G**) has a tendency to rapidly rise and create a free swirling convection current (**CC**) which draws the cooler atmosphere (and any oxygen contained therein) downwardly toward the solder wave, thus resulting in the formation of dross.

Another region in which dross is formed in the solder is at the place where the drive shafts for the wave pumps enter the solder reservoir. The rotation of those shafts produces a churning of the solder, whereby oxidation is promoted.

It will be appreciated that the dross formed in the solder eventually builds up to a level requiring that the solder pot be shut-down to enable the dross to be skimmed off the top of the solder reservoir. The frequency at which those costly shut-downs occur is a function of the rate of dross formation.

Therefore, it would be desirable to minimize the rate of dross formation beyond the rates currently achieved. It would also be desirable to minimize the amount of solder which is exposed to an oxidizing atmosphere in the bath.

The present invention relates to process and apparatus aspects relating to the wave soldering of a member such as a circuit board. The process involves emitting a solder wave upwardly from a solder nozzle, and passing the member along a path so that at least an underside of the member passes through the solder wave. Shield gas is provided within first and second gas plenums disposed upstream and downstream, respectively, of the solder wave as defined with reference to the direction of travel of the member. Each gas plenum includes a side wall disposed opposite the solder wave, with orifice means formed in the side wall. The shield gas is pressurized within each plenum so that the shield gas exits the orifice means for travel toward the solder wave at a velocity in the range of 1-30 m/s.

In another aspect of the process, shield gas is introduced into each plenum by conducting the shield gas along a delivery conduit extending longitudinally within the plenum. The gas is discharged along the longitudinal length of the delivery conduit. The shield gas is conducted outwardly from each plenum through the orifice means such that the velocity of the shield gas is substantially increased and is directed toward the solder wave.

In still another aspect of the process, the plenum side wall faces the solder wave, with vertically spaced orifice means in the side wall. Each plenum is arranged such that an upper portion of the side wall is spaced horizontally from the solder wave to form a gap therebetween, with an upper portion of the top surface of the solder wave being disposed above, and curving away from, the gap. Pressurized shield gas is provided within the plenums such that the shield gas is ejected from the orifice means for travel toward the solder wave, with at least an upper portion of the ejected gas being directed toward and across the portion of the top surface of the solder wave which curves away from the gap.

In still another aspect of the process, the shield gas may be ejected from a top wall of the plenum instead of, or in addition to, the discharging of shield gas from a side wall. Such upwardly discharged shield gas impinges against the underside of the member to strip the air from such underside.

An apparatus aspect of the invention comprises a solder reservoir, a solder nozzle disposed in the solder reservoir, a pump for ejecting an upward solder wave from the solder nozzle, and a conveyor for conveying the member such that an underside thereof passes through the solder wave.

First and second gas plenums are disposed adjacent upstream and downstream sides, respectively, of the solder wave, as defined with reference to a direction of travel of the conveying means. Means is provided for delivering pressurized shield gas into each plenum. Each plenum includes a side portion opposing a solder wave. Each side portion has orifice means for discharging the pressurized shield gas toward the solder wave. The orifice means is dimensioned so that pressurized shield gas is discharged through the solder means toward the solder wave at a velocity in the range of 1-30 m/s.

In another aspect of the apparatus, a delivery conduit may extend longitudinally within each plenum for introducing shield gas into the plenum so that the plenum is pressurized with shield gas. The side wall includes orifice means arranged to eject the pressurized shield gas toward the solder wave and is dimensioned to produce a substantial increase in the velocity of the shield gas.

In yet another aspect of the apparatus, a side portion of the plenum disposed opposite the solder wave has vertically spaced orifices for discharging shield gas. An upper portion of the plenum is spaced from the respective solder wave to form a gap therebetween, with a portion of a top surface of the solder wave disposed above, and curving away from, the gap. Lower ones of the orifices are arranged to direct pressurized shield gas toward a portion of the solder wave situated below the gap. Upper ones of the orifices are arranged to direct pressurized shield gas toward and across a portion of the top surface of the solder wave curving away from the gap.

In still a further aspect of the apparatus, a top wall of the plenum may include orifice means instead of, or in addition to, the orifice means provided in a side wall. Shield gas discharged upwardly from the orifice means in the top wall impinges against the underside of a member to strip entrained air therefrom.

In yet another aspect of the apparatus, the conveyor which conveys the member, is adjustable to vary the conveyor width and accommodate members of different widths. An enclosure overlying the solder reservoir includes an inlet and an outlet for a member being conveyed. An atmosphere of shield gas is established within the enclosure. A curtain extends horizontally across at least one of the inlet and outlet ends to cover a portion thereof not occupied by the conveyor. One end of the curtain is connected to the adjustable portion of the conveyor for movement therewith when the conveyor width is adjusted.

In still another aspect of the apparatus, a motor-driven shaft extends downwardly into the solder reservoir for operating the pump. A stationary hollow sleeve extends downwardly below the solder surface, with the shaft extending through the sleeve, in order to restrict churning of solder to a region within the sleeve. Pressurized shield gas is conducted into the sleeve to inert the solder being churned therein.

Another aspect of the apparatus involves an inerting assembly adapted for use in a wave soldering apparatus to provide an inerting atmosphere. The assembly comprises a plenum having a top wall and two downwardly depending side walls extending between opposite longitudinal ends of the plenum. At least one of the side walls includes orifice means formed therein. A gas delivery conduit extends longitudinally within the plenum for introducing shield gas into the plenum.

Another aspect of the apparatus involves providing the plenum with a bottom wall and submerging that bottom wall into the solder in the reservoir so that the solder situated directly beneath the bottom wall is not exposed.

The plenums are preferably adjustable angularly about a longitudinal axis of the plenum, and either horizontally or vertically.

The objects and advantages of the invention will become apparent from the following detailed description of preferred embodiments thereof in connection with the accompanying drawings in which like numerals designate like elements and in which :
- FIG. 1 is a vertical sectional view taken through a solder pot as a circuit board is being passed therethrough, in accordance with the present invention;
- FIG. 2 is a fragmentary perspective view of a gas plenum according to one embodiment of the present invention;
- FIG. 3 is a vertical sectional view taken through the solder pot along a vertical plane oriented perpendicular to a direction of movement of circuit boards and passing through a drive shaft of a wave pump;
- FIG. 4 is a view similar to FIG. 3 with the vertical plane passing through one of the pressurized gas plenums;
- FIG. 5 is a top perspective view of a first embodiment of a gas plenum assembly according to the present invention;
- FIG. 6 is a view similar to FIG. 4 of a second embodiment of a gas plenum assembly according to the present invention;
- FIG. 7 is a view similar to FIG. 4 of a third embodiment of a gas plenum assembly according to the present invention;
- FIG. 8 is a fragmentary schematic view showing the direction of gas flow from a pressurized gas plenum according to the present invention;
- FIG. 9 is a view similar to FIG. 8 of a modified plenum;
- FIG. 10 is a view similar to FIG. 8 of a prior art arrangement;
- FIG. 11 is a vertical sectional view taken through a solder pot as a circuit board is being passed therethrough, in accordance with a fourth embodiment of the present invention;
- FIG. 12 is a top perspective view of a gas plenum assembly according to the fourth embodiment of the present invention;
- FIG. 13 is a vertical sectional view taken through the solder pot and a gas plenum according to the fourth embodiment of the invention;
- FIG. 14 is a fragmentary schematic view showing the direction of gas flow from a pressurized gas plenum according to the fourth embodiment of the present invention;
- FIG. 15 is a cross-sectional view through a modified gas plenum;
- FIG. 16 is a view similar to FIG. 1 of a fifth preferred embodiment of the invention;
- FIG. 17 is a vertical sectional view through an adjustable gas plenum according to the invention;
- FIG. 18 is a sectional view taken along the line 18-18 in FIG. 17;
- FIG. 19 is a view similar to FIG. 18 of a modified adjustable gas plenum; and
- FIGS. 20, 21 and 22 are cross-sectional views of modified plenums, respectively, for use in the FIG. 16 embodiment.

Depicted in FIG. 1 is a solder pot (10) that contains a solder reservoir or bath (11) in which a pair of solder waves (12, 14) has been established by respective wave nozzles (16, 18) and adjustable pumps (20, 22) in a conventional manner. The wave (12) can be a turbulent wave, and the wave (14) can be a laminar wave, although the waves could exhibit any desired flow characteristics.

The wave (12) is disposed upstream of the wave (14), as defined with reference to the direction of travel (**T**) of circuit boards (26) that are conveyed by a conventional conveyor (30) such that at least the undersides of the circuit boards (26) pass sequentially through the solder waves (12, 14). The direction of travel (**T**) is inclined upwardly at an angle to horizontal, although it could be horizontal if desired.

A shield gas system is provided for resisting the oxidation of the solder in the reservoir. That system comprises a plurality of gas plenums (40, 50, 60). The first gas plenum (40) is located upstream of the first wave (12) (as defined with reference to the direction of conveyance of the circuit boards); the second gas plenum (50) is located between the waves (12, 14); the third gas plenum (60) is located downstream of the second wave (14). Each plenum is spaced from a respective solder wave to form a horizonal gap (**G**) therebetween.

Each gas plenum includes three upstanding walls, namely, one vertical end wall, two vertical side walls, and a top wall. For example, shown in FIG. 5 are first and second ones of the gas plenums (40, 50). The first gas plenum (40) includes a vertical end wall (42), two vertical side walls (44, 46), and a top wall (48). Likewise, the second gas plenum (42) includes one end wall (52), two side walls (54, 56), and a top wall (58). Depicted in FIG. 1 are the side walls (64, 66) and top wall (68) of the third gas plenum (60). The plenums (40, 50, 60) are open at their bottom sides so that each plenum is partially immersed in the solder, and the floor of the plenum chamber is defined by the surface of the solder. Also, the end of the plenum (40) disposed opposite the end wall (42) is open (see FIG. 4) and placed sealingly against a fixed vertical wall (32) disposed within the reservoir. One end of the plenum (40) is attached to a wall (33) of the solder pot by means of a bracket (34), and the other end is attached to the wall (32) by a bracket (35).

Similar brackets (not shown) are provided for attaching the other plenums (50, 60) to the walls (32, 34). Extending longitudinally within the plenum (40) is a gas delivery pipe (47). That pipe (47) is fastened to the wall (32) and is connected to a gas supply hose (36), the latter being connected to a source of pressurized shield gas, such as an inert gas, for example nitrogen, argon, carbon dioxide, a noble gas or any mixture thereof, or a mixture of an inert gas and a reducing gas such as H₂, a hydride such as silicon hydrides, etc. The delivery pipe (47) includes suitable outlets for enabling the shield gas to be discharged generally uniformly along the length of the plenum.

Each of the other plenums (50 and 60) is provided with its own gas delivery pipe (57, 67), respectively, functioning in a manner similar to the pipe (47).

Each of the gas plenums has longitudinally spaced gas discharge orifices for discharging the gas. The first gas plenum (40) includes orifices (45) formed in its side wall (46) facing the first wave (12); the second gas plenum (50) has gas orifices (55) formed in its side wall (54) facing the first wave (12), and orifices (55 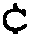 ) in its side wall (56) facing the second wave (14); the third gas plenum (60) has orifices (65) in its side wall (64) facing the second wave (14). Those orifices result in a uniform distribution of gas along the length of the wave.

The discharge orifices (45, 55, 55 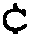 , 65) are shown as comprising horizontally elongated slits arranged as vertically spaced rows of horizontally spaced slits, but they can assume any other desired configuration, such as horizontally spaced, vertical slits. Instead of elongated slits, the orifices could be circular, oval or any other shape. Importantly, the area of the discharge orifices of each gas plenum is designed in conjunction with the magnitude of the gas flow provided to each plenum by the respective delivery pipe (47, 57, 67) to create a pressure in the range of 0.01-50.0 inches of water in each plenum, and such that the shield gas discharged therefrom in laminar streams having a high velocity in the range of 1-30 m/s, more preferably 3-8 m/s.

Furthermore, as shown in FIG. 8 the gas discharge orifices of the plenum are arranged to direct the high velocity shield gas toward the respective solder wave from the bottom to the top thereof. Thus, the lowermost row of slits (45') directs gas toward a lower portion of the wave (either horizontally or at an angle relative to horizontal (see FIG. 9)); the middle row of slits (45'') directs gas toward an intermediate portion of the wave; and the uppermost row (45''') of slits directs gas toward an upper portion of the wave.

In particular, the gas from the uppermost row of slits (45''') is directed toward and across the portion of the top surface (**TS**) of the wave located above, and curving away from, the gap (**G**), as shown in FIG. 8. As a result, high velocity gas emerging upwardly from the gap (**G**) is deflected to travel across the top of that portion (**TS**) of the wave top surface. The high velocity of the deflected gas provides the gas with a relatively high momentum which resists being displaced away from the wave by thermally generated forces emanating from the wave. Thus, even when there is no circuit board passing through the wave, a substantial portion (if not all) of the top surface of the wave will be blanketed by the gas, which tends to follow the contour of the wave for a substantial distance. This will not occur in the case of slow-moving gas which is not caused to be deflected, as shown in FIG. 10.

Furthermore, the high velocity of the gas according to the present invention minimizes the contact time between the gas and hot solder wave, so the gas exiting the gap (**G**) is relatively cool. That means that there will be less of a tendency for a swirling air current to be established above the gap which could draw cooler atmosphere (and possibly air) down toward the wave as compared to slower moving air which is significantly heated by the wave as previously described in connection with FIG. 10.

In addition, by discharging gas at high velocity from the slits, the slits will be less likely to become clogged by solder which may tend to splash toward the plenum. That would not be the case if the gas were to exit at such a slow speed that it could not effectively push away the solder.

It will be appreciated that the side walls (46, 54, 56, 64) need not be flat or perfectly vertical. Instead, they could be curved in any direction (e.g., see the broken lines in FIG. 9) and/or angled relative to vertical (see the solid lines in FIG. 9). It is only necessary that they be located generally opposite the respective solder wave so that gas streams emitted therefrom can contact the wave.

The top walls of one or all of the gas plenums can also be provided with gas discharge orifices. In that regard, attention is directed to FIG. 5 depicting the first and second gas plenums (40, 50) having gas discharge orifices (49, 59) in their respective side and top walls. Gas discharged upwardly from those orifices (49, 59) bears against the undersides of the circuit boards to strip therefrom oxygen-containing air which may be entrained by the circuit boards. The total area of those orifices is designed to provide a gas velocity in the range of 1-30 m/s, more preferably 3-8 m/s. Such a gas velocity is able to strip entrained air, without disrupting any solder (in the case of the second and third plenums (50, 60)). The top walls need not be flat, but can have other shapes, including a curved shape as shown in broken lines in FIG. 9.

In the event that a gas plenum is provided with discharge orifices in more than one wall thereof, It may be desirable to independently control the velocity of gas discharged from each wall. This can be accomplished by providing a divider within the plenum to segregate the gases discharged from the respective walls. For example, attention is directed to FIG. 2 depicting a divider (70) disposed within the second plenum (50). That divider creates three chambers (72, 74, 76) which are fed by three respective gas delivery pipes (not shown). The gases discharged through the respective discharge openings (55, 55 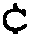 , 59) can thus have their velocities independently controlled. In similar fashion, either or both of the first and third gas plenums (40, 60) could be provided with a divider which divides the plenum into two chambers for independent control.

If desired, shield gas can be discharged solely through the side walls, as depicted in FIG. 6, or solely through the top walls, as depicted in FIG. 7. In FIG. 6, gas discharge openings (45, 55, 55 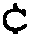 ) are formed solely in the side walls of the gas plenums (40A, 50A). In FIG. 7, discharge openings (47, 59) are formed solely in the top walls of the gas plenums (40B, 50B).

It is preferred that an enclosure (80) be arranged over the solder reservoir, with inlet and outlet curtains (82, 84) being positioned over inlet and outlet ends of the enclosure. In that way, the shield gas can be better retained in the vicinity of the solder waves (12, 14). The curtains can comprise vertical strips of flexible material arranged in horizontally overlapping relationship. The strips would be attached only at their upper ends to enable the conveyor and circuit boards to push them aside. The enclosure preferably has a cover (86) which includes a transparent middle section (88) preferably formed of glass to permit the soldering operation to be observed. The cover (80) can be hinged at (90) (see FIG. 3) to permit the cover to be raised if desired.

The cover (80) is hinged to a section (92) of the solder reservoir through which pump drive shafts (94) extend (see FIG. 3). Each pump drive shaft (94) is driven by a respective motor (96). In order to inert the area of the solder which is churned by the rotating action of the drive shafts (94), there is provided a stationary hollow sleeve (100) for each drive shaft. That sleeve (100) is of cylindrical configuration and extends downwardly below the upper level (102) of solder in the reservoir. Each drive shaft (94) extends through its respective sleeve (100). A shield gas under pressure is fed to the interior of the sleeve (100) by a supply hose (101), and the gas exits the sleeve (100) through a hole (103) formed in the sleeve. Hence, the only portion of the solder reservoir which is churned by the rotating drive shaft (94) is disposed within the sleeve and is inerted by the shield gas which is maintained under pressure within the sleeve (100).

The conveyor (30) for the circuit boards (26) travels on conventional carriers (110, 110 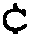 ) (see FIG. 3). That is, the conveyor comprises a pair of endlessly rotating chains (30', 30''). The chain (30') includes a flight (30'A) traveling into the plane of the paper in FIG. 3 (i.e., traveling away from the observer), and a flight (30'B) traveling out of the paper (toward the observer). Likewise, the conveyor chain (30'') includes flights (30''A, 30''B) traveling into and out of the paper, respectively. That conveyor arrangement is conventional. The carrier (110) is mounted to a wall (111) which is horizontally adjustable toward and away from the other carrier (110') in a conventional manner (not shown) to vary the spacing between the conveyor chains (30', 30'') in order to accommodate circuit boards (26) of different widths. The carrier (110) is connected to a horizontal curtain (112) which is separate from the aforementioned curtains (82, 84) and is provided to overlie the portion of the inlet and/or outlet not occupied by the conveyor (30). One end of the curtain (112) is mounted to a vertical roller (114) which is biased in rotation by coil torsion springs (113). The other end of the curtain is connected to the carrier (110). When the carrier (110) is horizontally adjusted in order to vary the conveyor width, the curtain (112) is automatically rolled (or unrolled). The curtain (112) can be disposed at the inlet and/or outlet of the enclosure.

Instead of employing a curtain (113) which rolls up, a collapsible curtain, e.g., a bellows-like member, could be employed which expands and contracts in an accordion-like manner when the carrier (110) is adjusted.

In operation, circuit boards (26) are conveyed by the conveyor (30) to the solder reservoir. The circuit boards may have been pre-treated with a flux and heated, in a conventional manner. As the circuit boards travel past the inlet curtain (82) and enter the enclosure (80), shield gas discharged upwardly from the top slits (49) of the first pressurized gas plenum (40) impinges against the underside of the circuit board to strip away entrained air as the board passes that gas flow. After passing the first pressurized gas plenum, the underside of the circuit board travels through the first solder wave (12) and is coated with solder in the customary manner. Then, the underside of the circuit board sequentially travels across: (i) an air-stripping flow of shield gas discharged from the top slits (59) of the second pressurized gas plenum (50), (ii) the second solder wave (14), and (iii) an air-stripping flow of shield gas discharged from top slits of the third pressurized gas plenum (60). The speed of the air-stripping gas flowing from the top slits of the second and third pressurized gas plenums (50, 60) is not great enough to disturb or remove solder from the undersides of the circuit boards. The formation of dross in the solder is minimized by the effective measures taken to keep air away from the solder. That is, the air-stripping flows of shield gas discharged from the top slits of the gas plenums (40, 50, 60) minimize the concentration of oxygen traveling in the vicinity of the solder. There is thus achieved a shielding atmosphere which is retained by the enclosure (80).

Furthermore, the surfaces of the solder waves are amply protected by shield gas ejected from the side slits (55 and 55') of the three pressurized gas plenums. Those gas flows are discharged at relatively high speed from the pressurized plenums, and are deflected by at least an upper gas flow from the plenum so as to travel across and in contact with the portion (**TS**) of the top surface of the wave which curves away from the gap (**G**). That gas produces an effective inerting of the wave surface (**TS**) even in the absence of a circuit board.

The high velocity of the gas traveling toward the gap (**G**) results in the gas emerging from the slot (**G**) being cooler than in the case of slow-moving gas. Hence, there is less of a tendency for circular convection currents to be established which can pull oxygen-containing atmosphere down toward the wave.

As an example, a plenum operated in accordance with the present invention employed orifices in a side wall representing about one percent of the surface area of the side wall. A flow of 100 scfh was established in the plenum to produce about 0.06 in/water of pressure, and a gas velocity at the orifices of about 6 m/s. For a flow of 300 scfh, a pressure of about 0.5 inches of water and gas velocity of about 18 m/s was established.

This can be compared to values calculated for similar flows of an inerting system according to FIG. 10, wherein for a flow of 100 scfh a pressure of 0.0001 inches of water was calculated that would give a gas velocity at the gap of about 0.24 m/s. At a 300 scfh flow rate, the pressure was calculated to be 0.0008 inches of water and the gas velocity at the gap about .72 m/s. It will be appreciated that in the FIG. 10 structure, the gas velocity increases as the gas approaches the gap (which defines a restriction). Thus, the gas flow within the chamber (**CH**) of FIG. 10 would be even lower than the 0.24 m/s and 0.72 m/s values. Those values can be compared, respectively, to the velocities of about 6 m/s and 18 m/s achievable in connection with the presently claimed invention.

The relatively high pressure of shield gas within the gas plenums serves to expel any oxygen therefrom.

The solder which is churned by the rotating drive shafts (94) of the wave pumps will not be oxidized, because it is blanketed by pressurized shield gas within the sleeves (100).

Depicted in FIGS. 11-15 is a fourth embodiment of the invention wherein each of the plenums includes a top wall, a bottom wall and at least three upstanding walls, namely, one vertical end wall, and two vertical side walls. For example, shown in FIG. 12 are first and second ones of the gas plenums (240, 250). The first gas plenum (240) includes a vertical end wall (242), two vertical side walls (244, 246), a bottom wall (243) and a top wall (248). Likewise, the second gas plenum (250) includes one end wall (252), two side walls (254, 256), a bottom wall (243), and a top wall (258). Depicted in FIG. 11 are the side walls (264, 266), bottom wall (263), and top wall (268) of the third gas plenum (260). The top walls (248, 258, 268) are always situated below or even with a topside of the adjacent solder wave. The height of the solder bath is continuously controlled so that the bottom walls of all of the plenums are always submerged in the solder. By thus submerging the bottom walls, it is ensured that all solder disposed beneath the plenums will be shielded from oxygen, thereby eliminating the need to inert the entire surface of the solder.

The end of the plenum (240) disposed opposite the end wall (242) can be open (see FIG. 13) and placed sealingly against a fixed vertical wall (232) disposed within the reservoir. One end of the plenum (240) is attached to a wall (233) of the solder pot by means of a bracket (234), and the other end is attached to the wall (232) by a bracket (235). Similar brackets (not shown) are provided for attaching the other plenums (250, 260) to the walls (232, 234).

Alternatively, both ends of the plenums could contain a wall, whereby the interior of the plenum is entirely enclosed, as will be explained later in connection with FIG. 17.

Extending longitudinally within the plenum (240) is a gas delivery pipe (247) for pressurizing the interior chamber of the plenum (240) with shield gas. That pipe (247) is fastened to the wall (232) and is connected to a gas supply hose (236), the latter being connected to a source of pressurized shield gas. The delivery pipe (247) includes suitable outlets for enabling the shield gas to be discharged generally uniformly along the length of the plenum.

Each of the other plenums (250 and 260) is provided with its own gas delivery pipe (257, 267) functioning in a manner similar to the pipe (247).

Each of the gas plenums has longitudinally spaced gas discharge orifices for discharging the gas. The first gas plenum (240) includes orifices (245) formed in its side wall (246) facing the first wave (212), and (optionally) orifices (245') in the top wall (248) (see FIGS. 12, 14); the second gas plenum (250) has orifices (255) formed in its side walls (254, 256) facing the first and second waves (12, 14), respectively, and (optionally) orifices (255') formed in the top wall (258); the third gas plenum (260) has orifices (265) in its side wall (264) facing the second wave (214), and (optionally) orifices (265') formed in the top wall (268). The orifices (245, 255, 265) produce a uniform distribution of gas along the length of the wave.

The discharge orifices are shown as comprising horizontally elongated slits arranged as vertically spaced rows of horizontally spaced slits, but they can assume any other desired configuration, such as horizontally spaced vertical slits. Instead of elongated slits, the orifices could be circular, oval or any other shape.

Importantly, the area of the discharge orifices of each side wall facing a solder wave is designed in conjunction with the magnitude of the gas flow provided to each plenum by the respective delivery pipe (247, 257, 267) to create a pressure in the range of 0.01-50.0 inches of water in each plenum, and such that the shield gas discharged therefrom in laminar streams toward the solder waves having a high velocity in the range of 1-30 m/s, more preferably 3-8 m/s.

Furthermore, as shown in FIG. 14 the gas discharge orifices of the side walls of each plenum are arranged to direct the high velocity shield gas toward the respective solder wave from the bottom to the top thereof. Thus, the lower row(s) of slits (245) directs gas toward a lower portion of the wave (either horizontally or at an angle relative to horizontal); and the uppermost row of slits (245) directs gas toward an upper portion of the wave.

In particular, the gas from the upper row of slits (245) is directed toward and across the portion of the top surface (**TS**) of the wave located above, and curving away from, the gap (**G**), as shown in FIG. 14. As a result, high velocity gas emerging upwardly from the gap (**G**) is deflected to travel across the top of that portion (**TS**) of the wave top surface.

As a result, the same advantages occur as in the first embodiment, namely the top surface of the wave being blanketed by the gas, there being less of a tendency for a swirling air current to be established above the gap, and there being less of a tendency for the slits in the plenum to clog.

It will be appreciated that the side walls (246, 254, 256, 264) need not be flat or perfectly vertical. Instead, they could be curved in any direction and/or angled relative to vertical. It is only necessary that they be located generally opposite the respective solder wave so that gas streams emitted therefrom can contact the wave. Attention is directed to FIG. 15 wherein each of the side walls of the plenum (250B) has upper and lower portions (254B', 254B'', 256B', 256B''). The upper portions (254B', 256B') are angled with respect to the lower portions to direct the inerting gas toward the top of the respective solder wave. That is, each upper portion faces in a direction having vertical and horizontal components, with the horizontal component being directed toward the adjacent solder wave.

The plenum (250B) is also provided with a non-apertured divider (270) for dividing the plenum interior chamber into two subchambers (250B', 250B''), each subchamber having a gas delivery pipe (257', 257''). By separately regulating the gas supplied by each pipe (257', 257''), the velocities of gases emitted from respective sides of the plenum can be varied relative to one another, so that those velocities can be adapted to the inerting requirements of the turbulent and laminar solder waves, respectively.

The side and top walls may assume any suitable configuration, such as convexly or concavely curved, as long as the inerting gas is directed toward the solder wave.

As observed earlier, the top walls of one or all of the gas plenums can, if desired, be provided with gas discharge orifices. Gas discharged upwardly from those orifices bears against the undersides of the circuit boards to strip therefrom oxygen-containing air which may be entrained by the circuit boards. The total area of those top orifices is designed to provide a gas velocity in the range of 1-30 m/s, more preferably 3-8 m/s. Such a gas velocity is able to strip entrained air, without disrupting any solder (in the case of the second and third plenums (250, 260).

Each gas plenum (240, 250, 260) may be mounted so as to be adjustable about a horizontal axis (280) extending parallel to the adjacent wave (see FIGS. 17-19), and to be further adjustable either vertically or horizontally. In particular, the gas plenum (240) is shown in FIG. 17 as having, in addition to the previously described top, bottom, end, and side walls, an additional end wall (242') which is welded to a jamnut (282) having an internal screw thread. Welded to the outer periphery of the gas delivery pipe (247) is a fitting (284) which includes a first sleeve part (284A) extending through a vertical slot (286) formed in the wall (232) of the solder pot, the sleeve part (284A) including an external screw thread. The fitting further includes a polygonal nut (284B) to which a turning tool (e.g., wrench) can be applied, and a hose-receiving sleeve part (284C) to which the hose (236) is attached.

The gas plenum (240) is mounted on the gas delivery pipe (247) by threading the jamnut (282) onto the sleeve part (284A) of the fitting (284). A free end of the gas delivery pipe (247) is loosely received in a support collar (287) attached to an opposite end wall (242) of the plenum.

The plenum is then positioned at a desired elevation within the solder pot by raising or lowering the gas delivery pipe (247) within the slot (286). Also, the plenum is positioned in a desired angular orientation by being rotated about the axis (280) until the side wall (246) is in a desired orientation relative to the solder wave (e.g., the side wall is oriented vertical as shown in sold lines in FIG. 14, or at an inclination to vertical as shown in phantom lines in FIG. 14). Then, the gas delivery tube (247) is rotated by rotating the nut (284B) to draw the plenum axially toward the wall (232) to tightly sandwich a sealing washer (288) between the jamnut (282) and the wall (232), whereby the plenum is securely held in position. The angular orientation of the plenum shown in phantom lines in FIG. 14 would not be performed in connection with the second plenum (250) whose side walls oppose respective solder waves, because when one side wall thereof is inclined at a desired angle to vertical, the other side would not be properly inclined. If angular adjustment is desired, the second plenum (250) would be formed of two separate plenums of similar construction to the first and third plenums (240, 260).

In order to enable the first and third plenums to be rotated about axis (280), a slight horizontal spacing is provided between each of those plenums and the adjacent wall of the solder pot as shown in FIG. 11. If no angular adjustment is provided, the plenums would be arranged flush with the respective walls of the solder pot.

Instead of being vertically adjustable within a vertical slot (286), the plenums could be horizontally adjustable within a horizontal slot (286A) as shown in FIG. 19. Of course, the ability to angularly adjust the plenum about the axis (280) would be maintained. Thus, the structure of FIG. 19 would be identical to that of FIGS. 17 and 18, except that the slot (286A) is horizontal rather than vertical.

If it is desired to make a plenum adjustable in three directions, i.e., vertically, horizontally, and angularly, a suitable mounting arrangement (not shown) could be provided.

There is also provided a cover and retractable curtain for the solder pot as described in connection with the first embodiment.

The operation of the fifth embodiment is the same as that described in connection with the first embodiment. The surface of the solder reservoir is protected against oxidation by being isolated from air, due to the submerging of the bottom walls of the plenums in the solder reservoir.

Furthermore, the surfaces of the solder waves are protected against oxidation by shield gas ejected from the side slits (245, 255, 265) of the three pressurized gas plenums which travel across and in contact with the portion (**TS**) of the top surface of the wave which curves away from the gap (**G**). That gas produces an effective inerting of the wave surface (**TS**) even in the absence of a circuit board.

The high velocity of the gas traveling toward the gap (**G**) results in the gas emerging from the slot (**G**) being cooler than in the case of slow-moving gas. Hence, there is less of a tendency for circular convection currents to be established which can pull oxygen-containing atmosphere down toward the wave.

Another embodiment of the invention, depicted in FIG. 16 is similar to that disclosed in connection with Fig. 11 except that the plenums (240, 250, 260) are not submerged within the solder reservoir. Rather, the bottom wall of each plenum is spaced above the surface (**B**) of the solder reservoir, and is provided with orifices (245''', 255''', 265''') to eject inerting gas into a space (**S**) formed between the bottom wall and the solder surface (**B**). The velocity of that gas is preferably less than that of gas emitted from the side orifices; those gas velocities can be independently regulated by controlling the total areas of the respective sets of gas orifices.

Alternatively, the plenums can be provided with a gas non-permeable divider (270) as shown in FIG. 20 with respect to the second plenum (250C). The divider (270'') divides the interior chamber of the plenum (250) into four subchambers (272, 274, 276, 278), each of which being provided with its own gas delivery pipe (257). By controlling the amounts of gas supplied by the respective pipes (257) (and/or by controlling the orifice size as noted earlier), the velocities of gas emitted from the respective walls can be independently regulated.

As an alternative to providing separate gas delivery tubes for the respective sub-chambers, a single gas delivery tube (257) could be provided for delivering gas to one sub-chamber. For example, with reference to FIG. 21, an apertured (i.e., gas permeable) divider (270'') is provided which divides the interior of plenum (250D) into two sub-chambers (272A, 276A). The gas delivery tube (257) is situated within the sub-chamber (272A), and gas is discharged from that sub-chamber through orifices formed in the top and side walls and also in the divider (270''). The total area of orifices in the divider is designed in conjunction with the rate of gas inflow from the delivery tube to create a desired pressure within the sub-chamber (272A). The velocities of gases emitted from the respective top and side walls can be controlled by the sizes of orifices provided therein.

The sizes of the respective orifices in the divider (270'') and bottom wall (253) of FIG. 21 can be designed to provide a desired gas pressure within the subchamber (276A) and a desired velocity of gas emitted from the bottom wall. The velocity of gas discharged from the bottom wall can thus be reduced to a desired low value.

FIG. 22 depicts another embodiment of a gas plenum (450) comprising three subchambers (452, 454, 456), each separated from the other by a non-permeable divider (458). Each subchamber has its own gas delivery pipe (452P, 454P, 456P) providing an independent control of gas flows and velocities. Particularly, the velocity of the gas discharged through the wall of the lower subchamber (456) can be smaller than the velocity of the gas discharged from other subchambers (452, 454), in consideration of the relatively small distance between the bottom wall (460) of the plenum and the surface (422) of the molten solder.

Although the present invention has been described in connection with preferred embodiments thereof, it will be appreciated by those skilled in the art that additions, deletions, modifications, and substitutions not specifically described may be made without departing from the spirit and scope of the invention as defined in the appended claims.

## Claims

1. Gas plenum to direct shield gas toward at least one of the solder waves of a wave soldering process and/or toward the underside of a member to be wave soldered in said process, including a side wall (46, 54, 56, 64, 246, 254, 256 or 265) able to be disposed opposite the solder wave, and optionally a top wall, with first orifice means (45, 45''', 55, 55' 245, 245'', 255, 255') formed in the side wall, and/or second orifice means formed in the top wall, and means for pressurizing shield gas within the plenum so that the shield gas can exit the orifice means for travel toward the solder wave and/or toward the underside of the member to be wave soldered.

2. Gas plenum according to Claim 1, characterized in that the side wall extends in a horizontal direction from one end to another of the gas plenum, said means for pressurizing shield gas comprising a gas delivery conduit (47, 57, 67, 247, 257, 257', 257'', 452P, 454P) extending longitudinally within the plenum and discharging the shield gas into the plenum from locations along the delivery conduit.

3. Gas plenum according to any of the preceding claims, characterized in that the side wall extends in a longitudinal direction from one end to another of the plenum, the shield gas exiting longitudinally spaced orifices formed in the side wall.

4. Gas plenum according to any of the preceding claims, characterized in that the side wall extends in a longitudinal direction from one end to another of the plenum, the shield gas exiting vertically spaced orifices formed in the side wall.

5. Gas plenum according claim 1 or 2, characterized in that the side wall extends in a longitudinal direction from one end to another of the plenum, the shield gas exiting orifices formed in the side wall, which are spaced apart vertically and longitudinally.

6. Gas plenum according to any of the preceding claims, characterized in that it comprises both first and second orifice means, and means for controlling independently the velocities of shield gases fed to the different orifice means.

7. Gas plenum according to any of the claims 1 to 5, characterized in that it has at least one additional wall in addition to the side wall, the additional wall being provided with orifice means for emitting shield gas, and in that it comprises means for controlling independently the velocities of shield gases fed to the different orifice means.

8. Gas plenum according to any of the preceding claims, characterized in that it includes a plurality of walls, one of the walls defining the side wall, at least one other of the walls including orifice means for emitting shield gas, the plenum including means for independantly controlling the velocity of gas fed to the different orifice means.

9. Gas plenum according to any of the preceding claims, characterized in that it is opened at its bottom side.

10. Gas plenum according to any of the claims 1 to 8, characterized in that it includes a bottom wall (243, 253, 263, 460).

11. Gas plenum according to claim 10, characterized in that the bottom wall is closed and able to be submerged within the solder of the wave soldering process.

12. Gas plenum according to claim 10, characterized in that the bottom wall is closed and able not to be submerged within the solder of the wave soldering process.

13. Gas plenum according to claim 10, characterized in that the bottom wall includes orifice means for emitting shield gas.

14. Gas plenum according to any of the preceding claims, characterized in that the plenum has two orifice-containing side wall portions, and a divider (70, 270, 270') dividing the interior of the plenum into subchambers bordered by respective side wall portions, and gas delivery pipes (257, 257'') extending into respective subchambers for delivering shielding gas thereto.

15. Gas plenum according to Claim 14, characterized in that each side wall portion includes an orifice-containing upper portion (254B', 256B') inclined relative to both the vertical and the horizontal to be able to discharge shield gas toward and across the top of the solder wave of the wave soldering process.

16. Gas plenum according to any of the preceding claims, characterized in that an orifice-containing part of the side wall portion is inclined relative to the vertical and the horizontal to be able to discharge shield gas toward and across the top of the solder wave of the wave soldering process.

17. Gas plenum according to any of the preceding claims, characterized in that it includes a top wall portion (48, 58, 68, 248, 258, 268) having orifice means for discharging shield gas upwardly against the underside of a member to strip entrained air therefrom, and further including a divider (70, 270') disposed within the plenum for dividing the plenum interior into sub-chambers communicating with the side wall portion and top wall portion, respectively.

18. Gas plenum according to Claim 17, characterized in that the means for introducing pressurized gas into the plenum introduces separate gas flows into respective sub-chambers, the divider being gas-impermeable.

19. Gas plenum according to Claim 17, characterized in that the means for introducing pressurized gas comprises gas delivery conduits disposed within respective sub-chambers and extending substantially parallel to an adjacent solder wave.

20. Gas plenum according to Claim 17, characterized in that the divider is gas permeable.

21. Gas plenum according to any of the preceding claims, characterized in that it is adjustable vertically.

22. Gas plenum according to any of the preceding claims, characterized in that it is adjustable horizontally.

23. Gas plenum according to any of the preceding claims, characterized in that it is rotatably adjustable about an axis (280) extending substantially parallel to an adjacent solder wave.

24. Gas plenum according to Claim 23, characterized in that the means for introducing pressurized shield gas comprises a gas delivery pipe (247) defining said axis.
